# EUROPEAN PATENT SPECIFICATION

(11) **EP 2 700 254 B1**
(45) Date of publication and mention of the grant of the patent: **04.03.2020**
(21) Application number: 12773641.1
(22) Date of filing: 19.04.2012
(51) Int. Cl.: G06F 3/048, G06F 3/14, G06F 3/0484, H04L 29/12, H04W 8/26

(54) **APPARATUS AND METHOD FOR TRANSMITTING AND RECEIVING IP INFORMATION IN A WIRELESS COMMUNICATION NETWORK**
VORRICHTUNG UND VERFAHREN ZUM SENDEN UND EMPFANGEN VON IP-INFORMATIONEN IN EINEM DRAHTLOSEN KOMMUNIKATIONSNETZ
APPAREIL ET PROCÉDÉ POUR TRANSMETTRE ET RECEVOIR DES INFORMATIONS IP DANS UN RÉSEAU DE COMMUNICATION SANS FIL

(30) Priority: 19.04.2011 US 201161477012 P; 17.04.2012 KR 20120039838
(43) Date of publication of application: 26.02.2014
(73) Proprietor: Samsung Electronics Co., Ltd., Suwon-si, Gyeonggi-do 443-742 (KR)
(72) Inventor: CHO, Seong-Ho, Gyeonggi-do 443-742 (KR); LEE, Jae-Hwan, Gyeonggi-do 443-742 (KR); NAM, Sang Su, Gyeonggi-do 443-742 (KR); LEE, Kyoung-Yong, Gyeonggi-do 443-742 (KR)
(74) Representative: Nederlandsch Octrooibureau
(86) International application number: PCT/KR2012/003001
(87) International publication number: WO 2012/144820

(56) References cited:
- KR-A- 20060 061 989
- KR-A- 20080 011 020
- KR-A- 20090 121 938
- US-A1- 2010 293 257
- US-A1- 2011 047 289
- WOUNDY COMCAST CABLE K KINNEAR CISCO SYSTEMS R: "Dynamic Host Configuration Protocol (DHCP) Leasequery; rfc4388.txt", 20060201, 1 February 2006 (2006-02-01), XP015044820, ISSN: 0000-0003
- KIM KINNEAR BERNIE VOLZ NEIL RUSSELL MARK STAPP CISCO SYSTEMS ET AL: "Bulk DHCPv4 Lease Query; draft-ietf-dhc-dhcpv4-bulk-leasequery-00.t xt", BULK DHCPV4 LEASE QUERY; DRAFT-IETF-DHC-DHCPV4-BULK-LEASEQUERY-00.T XT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, vol. dhc, 13 February 2009 (2009-02-13), XP015060797,
- FINLAYSON ET AL: "A Reverse Address Resolution Protocol; rfc903.txt", 19840601, 1 June 1984 (1984-06-01), XP015006895, ISSN: 0000-0003
- Wi-Fi Alliance Technical Committee ET AL: "Wi-Fi Peer-to-Peer (P2P) Technical Specification - Draft Version 1.14", , 25 June 2010 (2010-06-25), pages 1-154, XP055079697, Retrieved from the Internet: URL:http://www.slideshare.net/ilarionocent ini/savedfiles?s_title=wifi-p2p-technical- specification-draft-v114&user_login=latex3 e [retrieved on 2013-09-17]

## Description

### Technical Field

The present invention belongs to the technical field of IP information transmission in a Wi-Fi Direct network. The present invention is defined by a first independent claim referring to a method (claim 6) and a second independent claim referring to a first mobile terminal (claim 1) configured to perform the method claim 6 and a third independent claim referring to a method (claim 9) and a fourth independent claim referring to a second mobile terminal (claim 4) configured to perform the method claim 9. Further embodiments are defined by the dependent claims.

### Background Art

Wireless Fidelity (Wi-Fi) Direct technology, which is a type of short range communication, designates mobile terminals as a group owner and a group clients through negotiation with each other, where the group owner operates as an Access Point (AP).

Specifically, in Wi-Fi Direct communication technology, after mobile terminals form a group (i.e., establish a group owner and group clients) by providing a connection on a Media Access Control (MAC) layer, the group members may perform IP communication with each other using a protocol for allocating IP addresses, such as Dynamic Host Configuration Protocol (DHCP) and BootP.

US 2010/293257 A1 discloses a (DHCP) server including DHCP logic and an "active leasequery channel response logic" for keeping an external database synchronized with the DHCP address binding database of the DHCP server logic.

RFC 4388, "Dynamic Host Configuration Protocol (DHCP) Leasequery" (2006) discloses a DHCP server configured to respond to a DHCPLEASEQUERY message.

Draft IETF document "Bulk DHCPv4 Lease Query" (draft-ietf-dhc-dhcpv4-bulk-leasequery-OO.txt) (2009) discloses a DHCP server with a DHCPBULKLEASEQUERY message.

Document RFC 903 "A Reverse Address Resolution Protocol" (1984) relates to a Reverse Address Resolution Protocol (RARP) for resolving a host's hardware address given its protocol address.

US 2011/0047289 A1 discloses a method for IP address allocation. In one embodiment, the method includes receiving DHCP (Dynamic Host Configuration Protocol) information by a driver module operable on a mobile station prior to the mobile station sending a DHCP discovery message.

### Disclosure of Invention

### Technical Problem

However, a group owner obtains the IP addresses by operating a DHCP server or may obtain IP address information from the DHCP server. Consequently, group clients cannot obtain IP information of the other group clients by themselves.

### Technical Solution

Accordingly, the present invention is designed to address at least the problems and/or disadvantages described above and to provide at least the advantages described below.

An aspect of the present invention is to provide an apparatus and method for providing IP information to facilitate IP-based TCP/UDP communication among group members in a group.

In accordance with an aspect of the present invention, an apparatus is provided for transmitting IP information in a wireless communication network. The apparatus includes a memory that stores IP information of at least one mobile terminal included in a group of mobile terminals for short-range wireless communication; and a controller that receives an IP information request message requesting the IP information of the at least one mobile terminal included in the group, generates the IP information of the at least one mobile terminal included in the group based on the stored

IP information, and transmits the generated IP information.

In accordance with another aspect of the present invention, an apparatus is provided for receiving IP information in a wireless communication network. The apparatus includes a memory; and a controller that sends an IP information request message requesting IP information of at least one mobile terminal included in a group of mobile terminals for short-range wireless communication, receives the IP information of the at least one mobile terminal included in the group, in response to the IP information request message, and stores the received IP information in the memory.

In accordance with another aspect of the present invention, a method is provided for transmitting IP information in a wireless communication network. The method includes storing, by the mobile terminal, IP information of at least one mobile terminal included in a group of mobile terminals for short-range wireless communication; receiving an IP information request message requesting the IP information of the at least one mobile terminal included in the group; generating the IP information of the at least one mobile terminal included in the group, based on the stored IP information; and transmitting the generated IP information.

In accordance with another aspect of the present invention, a method is provided for receiving IP information in a wireless communication network. The method includes sending, by the mobile terminal, an IP information request message requesting IP information of at least one mobile terminal included in a group of mobile terminals for short-range wireless communication; receiving the IP information of the at least one mobile terminal included in the group, in response to the IP information request message; and storing the received IP information.

### Advantageous Effects of Invention

According to embodiments of the present invention, a group owner provides IP information including IP addresses and MAC address information of the group owner and group clients (or group members) to the group clients, thus facilitating data communication among the group members.

### Brief Description of Drawings

The above and other aspects, features, and advantages of certain embodiments of the present invention will be more apparent from the following description taken in conjunction with the accompanying drawings, in which:
FIGs. 1a and 1b illustrate a wireless communication system according to an embodiment of the present invention;
FIG. 2 is a block diagram illustrating a first mobile terminal according to an embodiment of the present invention;
FIG. 3 is a block diagram illustrating a second mobile terminal according to an embodiment of the present invention;
FIG. 4 is a signal flow diagram illustrating a method of providing IP information in a wireless communication system according to an embodiment of the present invention;
FIG. 5 is a flow chart illustrating a method of providing IP information in a first mobile terminal according to an embodiment of the present invention;
FIG. 6 is a flow chart illustrating a method of providing IP information in a second mobile terminal according to an embodiment of the present invention;
FIG. 7 is a signal flow diagram illustrating a method of providing IP information in a wireless communication system according to an embodiment of the present invention;
FIGs. 8a and 8b are signal flow diagrams illustrating a method of providing IP information in a wireless communication system according to an embodiment of the present invention; and
FIGs. 9a and 9b are signal flow diagrams illustrating a method of providing IP information in a wireless communication system according to an embodiment of the present invention.

Throughout the drawings, the same drawing reference numerals will be understood to refer to the same elements, features and structures.

### Mode for the Invention

Various embodiments of the present invention will now be described in detail with reference to the accompanying drawings. In the following description, specific details such as detailed configuration and components are merely provided to assist the overall understanding of certain embodiments of the present invention. Therefore, it should be apparent to those skilled in the art that various changes and modifications of the embodiments described herein can be made without departing from the scope and spirit of the present invention. In addition, descriptions of well-known functions and constructions are omitted for clarity and conciseness.

Mobile terminals, to which embodiments of the present invention are applicable include but are not limited to videophones, mobile phones, smart phones, International Mobile Telecommunication 2000 (IMT-2000) terminals, Code Division Multiple Access (WCDMA) terminals, Universal Mobile Telecommunication Service (UMTS) terminals, Personal Digital Assistants (PDAs), Portable Multimedia Players (PMPs), Digital Multimedia Broadcasting (DMB) terminals, E-Book terminals, portable computers (e.g., notebook computers, tablet computers, etc.), digital cameras, etc.

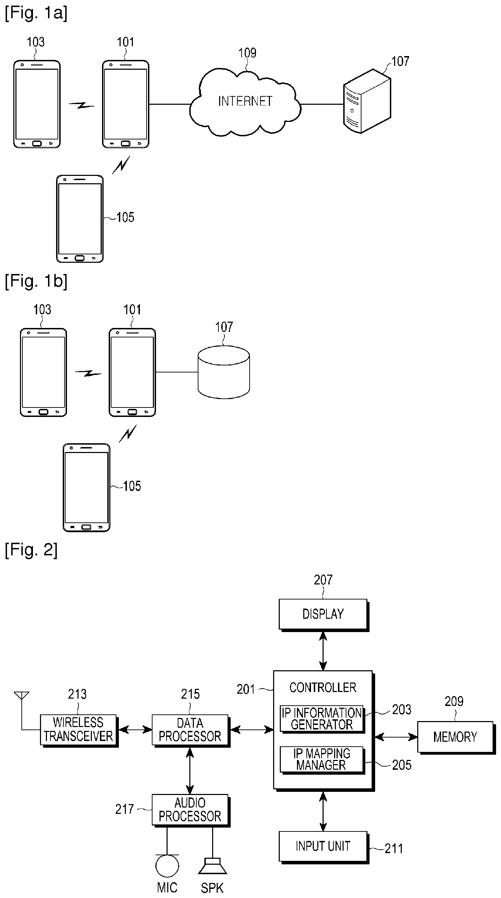

FIGs. 1a and 1b illustrate a wireless communication system according to an embodiment of the present invention.

Referring to FIG. 1a, the wireless communication system includes first to third mobile terminals 101, 103, and 105, a wireless communication network 109, and a DHCP server 107. The first to third mobile terminals 101, 103, and 105 form a short-range communication network based on Wi-Fi Direct technology. Using Wi-Fi Direct technology, any one of the first to third mobile terminals 101, 103, and 105 may serve as an AP, and the other mobile terminals connect with AP, thereby forming a group.

When forming a group, the first to third mobile terminals 101, 103, and 105 discover each other, and determine which of the first to third mobile terminals 101, 103, and 105 will serve as the AP, through negotiation. A mobile terminal serving as an AP is called a group owner, and the other mobile terminals are called group clients. For example, for the description of FIG. 1, the first mobile terminal 101 is designated as the AP, and is called the group owner, and the second and third mobile terminals 103 and 105 are called group clients.

The wireless communication network 109 transmits and receives data with the DHCP server 107 and the first to third mobile terminals 101, 103, and 105. The DHCP server 107 allocates an IP address to at least one of the mobile terminals included in the group, generates IP allocation information for mobile terminals, and transmits the generated IP allocation information to the first mobile terminal 101 over the wireless communication network 109. The IP allocation information includes DHCP information for the mobile terminals to which IP addresses are allocated. For example, the DHCP information includes default gateway information, IP addresses of mobile terminals to which IP addresses are allocated, IP netmask, first or second Domain Name System (DNS) server information, domain information, etc.

Upon receiving a group IP allocation information request message from the group owner, i.e., the first mobile terminal 101, the DHCP server 107 generates group IP allocation information including IP allocation information for at least one mobile terminal included in the group, and transmits the generated group IP allocation information to the first mobile terminal 101.

Upon receiving an IP deallocation request from any one of the mobile terminals included in the group, the DHCP server 107 deallocates an IP address of the mobile terminal, generates IP deallocation information for the IP-deallocated mobile terminal, and transmits the generated IP deallocation information to the first mobile terminal 101. For example, the IP deallocation information includes an indicator indicating the deallocation of an IP address of the IP-deallocated mobile terminal, and a deallocated IP address.

For example, in FIG. 1, where the first mobile terminal 101 is set as the group owner, the DHCP server 107 transmits IP allocation information including IP allocation information allocated to the first to third mobile terminals 101, 103, and 105, to the first mobile terminal 101.

As another example, if a fourth mobile terminal (not shown) enters the group, the DHCP server 107 transmits IP allocation information including IP information of the fourth mobile terminal, to the first mobile terminal 101.

As another example, if the third mobile terminal 105 leaves the group, the DHCP server 107 transmits IP deallocation information for the third mobile terminal 105, to the first mobile terminal 101.

The first mobile terminal 101 forms a group with the second and third mobile terminals 103 and 105 in accordance with the Wi-Fi Direct technology, and designates a group owner by negotiating with the second and third mobile terminals 103 and 105 included in the group. After being determined as the group owner, the first mobile terminal 101 receives IP allocation information for at least one mobile terminal included in the group from the DHCP server 107. Wi-Fi Direct communication refers to communication based on Wi-Fi Direct technology. The first mobile terminal 101 stores IP information of the first to third mobile terminals 101, 103, and 105 included in the group, based on the IP allocation information. For example, the IP information may be stored in a database of the first mobile terminal 101.

The first mobile terminal 101 determines whether it receives an IP information request message from any one of the second and third mobile terminals 103 and 105. The IP information request message requests IP information of at least one mobile terminal included in the group.

Upon receiving the IP information request message, the first mobile terminal 101 searches the stored IP information, generates IP information including IP addresses allocated to the first to third mobile terminals 101, 103, and 105, and transmits the generated IP information to the mobile terminal that sent the IP information request message. For example, the IP information includes an IP address, an identifier, a virtual MAC address, a device name, and DHCP information for at least one mobile terminal included in the group.

For example, the IP information may include IP information of all of the mobile terminals in the group, i.e., the first to third first to third mobile terminals 101, 103, and 105, or when the second mobile terminal 103 sends the IP information request message, the IP information may include IP information of the first and third mobile terminals 101 and 105, excluding IP information of the second mobile terminal 103.

Each of the second and third mobile terminals 103 and 105 is allocated an IP address from the DHCP server 107 and may send an IP information request message to the first mobile terminal 101, i.e., the group owner. Further, each of the second and third mobile terminals 103 and 105 may communicate with a mobile terminal (or another group client) via the first mobile terminal 101, based on the IP information received from the first mobile terminal 101 in response to the IP information request message.

For example, when the second mobile terminal 103 sends an IP information request message, the second mobile terminal 103 may receive IP information including IP addresses of the first to third mobile terminals 101, 103, and 105, and transmit data to the third mobile terminal 105 based on the IP address of the third mobile terminal 105 included in the received IP information.

As another example, when the second mobile terminal 103 sends an IP information request message, the second mobile terminal 103 may receive IP information including IP addresses of the first and third mobile terminals 101 and 105, and transmit data to the third mobile terminal 105 based on the received IP information.

Referring to FIG. 1b, the wireless communication system includes first to third mobile terminals 101, 103, and 105, and a DHCP server 107 that the first mobile terminal 101 operates on its own.

The wireless communication system illustrated in FIG. 1b is the same as the wireless communication system illustrated in FIG. 1a, except that it does not include the wireless communication network 109. Further, the first to third mobile terminals 101, 103, and 105, and the DHCP server 107 illustrated in FIG. 1b are the same as those illustrated in FIG. 1a in operation, so a repetitive detailed description of FIG. 1b will not be provided.

FIG. 2 is a block diagram illustrating a first mobile terminal according to an embodiment of the present invention.

Referring to FIG. 2, the first mobile terminal 101 includes a controller 201, a display 207, a memory 209, an input unit 211, a wireless transceiver 213, a data processor 215, and an audio processor 217.

The wireless transceiver 213 includes a wireless transmitter for up-converting a frequency of transmission signals and amplifying the up-converted transmission signals, and a wireless receiver for low-noise-amplifying received signals and downconverting a frequency of the low-noise-amplified received signals.

The data processor 215 encodes and modulates transmission signals, and demodulates and decodes received signals. For example, the data processor 215 may include a modulator/demodulator (modem) and a coder/decoder (codec), such as a data codec for processing data signals, e.g., packet data, and an audio codec for processing audio signals, e.g., voice.

The audio processor 217 processes received audio signals output from the data processor 215 for output via a speaker SPK, and processes audio signals picked up by a microphone MIC and transfers them to the data processor 215.

The input unit 211, e.g., a touch screen and/or key input, includes keys for inputting numeric and character information and function keys for setting various functions.

The display 207 displays images on a screen, and displays output data requested by the controller 201.

The memory 209 stores programs and a data. For example, the programs may include booting and Operating System (OS) programs for controlling the overall operation of the first mobile terminal 101, and the data includes various data generated during operation of the first mobile terminal 101. Where the first mobile terminal 101 is designated as the group owner, the memory 209 stores received IP allocation information.

For example, the memory 209 may store the IP allocation information in a database format as shown in Table 1 below.

### Table 1

**[Table 1]**

| Mobile Terminal | IP Add | Virtual MAC Add | Interface MAC Add |
|---|---|---|---|
| Mobile Terminal 1 | x.x.x.x | aaa | bbb |
| Mobile Terminal 2 | y.y.y.y | ccc | ddd |

In Table 1, 'Virtual MAC Add' represents a MAC address virtually allocated to each of the first and second mobile terminals 101 and 103, and 'Interface MAC Add' represents a MAC address allocated to each of the first and second mobile terminals 101 and 103.

The virtual MAC addresses are used by each of the first to third mobile terminals 101, 103, and 105 included in the group to identify the other mobile terminals except itself, and the interface MAC addresses are used by the DHCP server 107 to identify the first to third mobile terminals 101, 103, and 105 included in the group.

The controller 201 controls the overall operation of its first mobile terminal 101. Upon receiving an IP information request message from a mobile terminal (or a group client) after the first mobile terminal 101 is designated as a group owner, the controller 201 transmits IP information of the mobile terminals included in the group to the mobile terminal that sent the IP information request message, in response to the received IP information request message.

More specifically, the controller 201 includes an IP information generator 203 and an IP mapping manager 205. When the first mobile terminal 101 is designated as the group owner, the IP mapping manager 205 receives IP allocation information from the DHCP server 107. For example, the IP allocation information includes IP addresses of the first to third mobile terminals 101, 103, and 105, an IP netmask, first or second DNS server information, domain information, etc. The IP allocation information may include interface MAC addresses for identifying the first to third mobile terminals 101, 103, and 105, and IP addresses corresponding to the interface MAC addresses.

As described above, communication between the DHCP server 107 and the first to third mobile terminals 101, 103, and 105 is performed using interface MAC addresses, and communication among the first to third mobile terminals 101, 103, and 105 is performed using virtual MAC addresses. Therefore, in order to transmit the IP addresses received from the DHCP server 107 to the second and third mobile terminals 103 and 105, the first mobile terminal 101 processes mapping IP addresses of the second and third mobile terminals 103 and 105 to virtual MAC addresses.

Specifically, the IP mapping manager 205 stores IP information of the second and third mobile terminals 103 and 105 (or group clients) based on the IP allocation information. For example, the IP mapping manager 205 may store the IP information in a database as shown in Table 1 above.

Upon receiving different IP allocation information (or IP deallocation information) from the DHCP server 107, the IP mapping manager 205 updates the stored IP information based on the received IP allocation information or IP deallocation information. For example, if a fourth mobile terminal (not shown) newly enters the group, the IP mapping manager 205 may receive IP allocation information including an IP address allocated to the fourth mobile terminal from the DHCP server 107, and update the stored IP information to include IP information of the fourth mobile terminal based on the received IP information.

The IP deallocation information may include an indicator indicating the deallocation of an IP address of a specific mobile terminal, and a deallocated IP address. For example, if the third mobile terminal 105 leaves the group, the IP mapping manager 205 may receive IP deallocation information including an IP address allocated to the third mobile terminal 105 from the DHCP server 107, and update the databased IP information by deleting the IP information of the third mobile terminal 105, based on the received IP deallocation information.

The IP information generator 203 determines whether an IP information request message is received from any one of the second and third mobile terminals 103 and 105. Again, the IP information request message requests IP information related to the first to third mobile terminals 101, 103, and 105 included in the group.

Upon receiving the IP information request message, the IP information generator 203 searches the stored IP information, generates IP information including IP addresses and virtual MAC addresses allocated to the first to third mobile terminals 101, 103, and 105, and transmits the generated IP information to the mobile terminal that sent the IP information request message. For example, after connecting a socket capable of receiving IP broadcast to a specific port, the IP information generator 203 transmits the IP information through the socket, upon receiving an IP information request message through IP broadcast.

As described above, the IP information may include IP information of all of the mobile terminals included in the group, or may include IP information of the mobile terminals included in the group, except for the mobile terminal that sent the IP information request message. For example, the IP information may include IP information of the first to third mobile terminals 101, 103, and 105, or when the second mobile terminal 103 sends the IP information request message, the IP information may include IP information of the first and third mobile terminals 101 and 105.

The IP information may include IP addresses of mobile terminals, but also group client identifiers, virtual MAC addresses, device names, and DHCP information. For example, the DHCP information may include default gateway information, IP addresses of group clients, IP netmask, first or second DNS server information, domain information, etc.

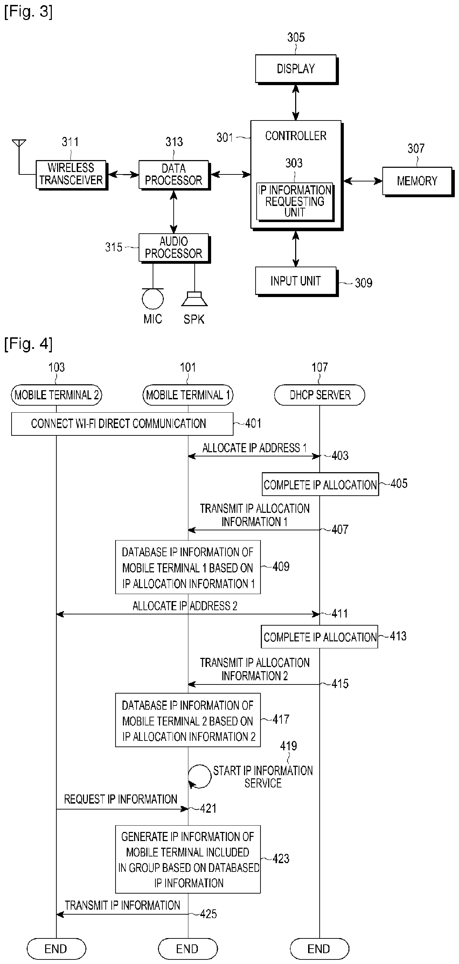

FIG. 3 is a block diagram illustrating a second mobile terminal according to an embodiment of the present invention.

Referring to FIG. 3, the second mobile terminal 103 includes a controller 301, a display 305, a memory 307, an input unit 309, a wireless transceiver 311, a data processor 313, and an audio processor 315.

The wireless transceiver 311 includes a wireless transmitter for up-converting a frequency of transmission signals and amplifying the up-converted transmission signals, and a wireless receiver for low-noise-amplifying received signals and downconverting a frequency of the low-noise-amplified received signals.

The data processor 313 codes and modulates transmission signals, and demodulates and decodes received signals. For example, the data processor 313 may include a modem and a codec, such as a data codec for processing data signals, and an audio codec for processing audio signals.

The audio processor 315 processes received audio signals output from the data processor 313 for output via a speaker SPK, and processes audio signals picked up by a microphone MIC and transfers them to the data processor 313.

The input unit 309, e.g., a touch screen and/or key input, includes keys for inputting numeric and character information and function keys for setting various functions.

The display 305 displays images on a screen, and displays output data requested by the controller 301.

The memory 307 stores programs and data. For example, the programs include booting and OS programs for controlling the overall operation of the second mobile terminal 103, and the data includes various data generated during operation of the second mobile terminal 103.

When the second mobile terminal 103 is designated as a group client, the memory 307 stores IP information received from the first mobile terminal 101, in response to an IP information request message sent by the second mobile terminal 103.

The controller 301 controls the overall operation of its second mobile terminal 103. In particular, the controller 301 receives IP information of a mobile terminal included in the group from a group owner.

More specifically, the controller 301 includes an IP information requesting unit 303.

After the second mobile terminal 103 is designated as a group client, the IP information requesting unit 303 sends an IP information request message for requesting IP information of the mobile terminals included in the group. In response to the sent IP information request message, the IP information requesting unit 303 receives the IP information, stores the received IP information, and performs data communication, e.g., with the third mobile terminal 105, based on the stored IP information. The IP information requesting unit 303 sends an IP information request message for requesting IP addresses of group clients through IP broadcast, and receives IP information through a socket.

For example, the IP information requesting unit 303 may receive IP information including IP addresses of the first to third mobile terminals 101, 103, and 105 in response to the IP information request message, stores IP addresses of the first and third mobile terminals 101 and 105 included in the received IP information, in the memory 307, and transmit data to the third mobile terminal 105, based on the stored IP addresses of the first and third mobile terminals 101 and 105.

FIG. 4 is a signal flow diagram illustrating a method of providing IP information in a wireless communication system according to an embodiment of the present invention.

Referring to FIG. 4, the first and second mobile terminals 101 and 103 connect via Wi-Fi Direct communication in step 401. More specifically, when forming a group through Wi-Fi Direct communication, the first and second mobile terminals 101 and 103 discover each other, and designate the first and second mobile terminals 101 and 103 as a group owner and a group client, respectively, through negotiation with each other. Although, the first mobile terminal 101 is designated as a group owner and the second mobile terminal 103 is designated as a group client herein, the designations could also be switched.

In step 403, the first mobile terminal 101 is allocated a first IP address by communicating with the DHCP server 107. More specifically, the first mobile terminal 101 discovers at least one adjacent DHCP server, determines a DHCP server from among the discovered adjacent DHCP servers, to which it will send an IP allocation request, and sends an IP allocation request message to the determined DHCP server. When the first mobile terminal 101 is allocated an IP address from the DHCP server, the first mobile terminal 101 sends an Acknowledgement (ACK) message indicating the success in allocation of an IP address, to the determined DHCP server.

In step 405, upon receiving the ACK message from the first mobile terminal 101, the DHCP server 107 completes the IP allocation to the first mobile terminal 101.

In step 407, the DHCP server 107 generates first IP allocation information for the first mobile terminal 101, and transmits the generated first IP allocation information to the first mobile terminal 101. The first IP allocation information includes DHCP information for the first mobile terminal 101. For example, the DHCP information includes default gateway information, an IP address of the first mobile terminal 101, IP netmask, first or second DNS server information, domain information, etc.

In step 409, the first mobile terminal 101 receives the first IP allocation information, and stores IP information of the first mobile terminal 101, based on the received first IP allocation information. For example, the first mobile terminal 101 may store IP information of the first mobile terminal 101 in a database as shown in Table 1.

In step 411, the second mobile terminal 103 is allocated a second IP address by communicating with the DHCP server 107. The second mobile terminal 103 discovers at least one adjacent DHCP server, determines a DHCP server from among the discovered DHCP servers, to which it will send an IP allocation request, and sends an IP allocation request message to the determined DHCP server. When the second mobile terminal 103 is allocated an IP address from the DHCP server, the second mobile terminal 103 sends an ACK message indicating the success in allocation of an IP address, to the determined DHCP server.

In step 413, upon receiving the ACK message from the second mobile terminal 103, the DHCP server 107 completes the IP allocation to the second mobile terminal 103.

In step 415, the DHCP server 107 generates second IP allocation information for the second mobile terminal 103, and transmits the generated second IP allocation information to the first mobile terminal 101. The second IP allocation information includes DHCP information for the second mobile terminal 103. For example, the DHCP information may include default gateway information, an IP address of the second mobile terminal 103, an IP netmask, first or second DNS server information, domain information, etc.

In step 417, the first mobile terminal 101 receives the second IP allocation information, and stores IP information of the second mobile terminal 103, based on the received second IP allocation information. For example, the first mobile terminal 101 may store IP information of the second mobile terminal 103 in a database as shown in Table 1.

In step 419, the first mobile terminal 101 starts an IP information service, i.e., a service for providing IP information of mobile terminals included in the group.

In step 421, the second mobile terminal 103 generates an IP information request message and sends the generated IP information request message requesting IP information of at least one mobile terminal included in the group, to the first mobile terminal 101.

In response, in step 423, the first mobile terminal 101 generates IP information of the mobile terminals included in the group, based on the stored IP information, and in step 425, transmits the generated IP information to the second mobile terminal 103 in step 425. For example, the second mobile terminal 103 may receive IP information including an IP address, an identifier, a virtual MAC address, a device name, and DHCP information for the first mobile terminal 101.

Thereafter, the second mobile terminal 103 receives the IP information, stores the received IP information, and performs communication-related functions, based on the stored IP information.

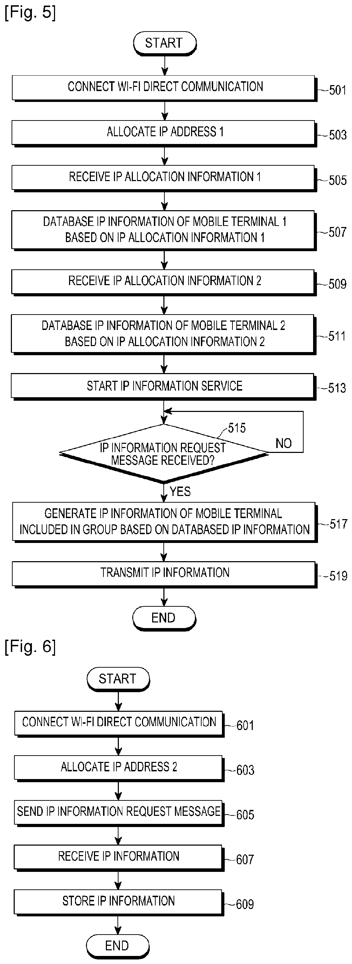

FIG. 5 is a flow chart illustrating a method of providing IP information in a first mobile terminal according to an embodiment of the present invention.

Referring to FIG. 5, in step 501, the first mobile terminal 101 connects via Wi-Fi Direct communication to the second mobile terminal 103. More specifically, when forming a group through Wi-Fi Direct communication, the first and second mobile terminals 101 and 103 discover each other, and designate the first and second mobile terminals 101 and 103 as a group owner and a group client, respectively, through negotiation with each other.

In step 503, the first mobile terminal 101 is allocated a first IP address by communicating with the DHCP server 107.

In step 505, the first mobile terminal 101 receives first IP allocation information from the DHCP server 107. As described above, the first IP allocation information may include DHCP information for the first mobile terminal 101. For example, the DHCP information includes default gateway information, an IP address of the first mobile terminal 101, an IP netmask, first or second DNS server information, domain information, etc.

In step 507, the first mobile terminal 101 stores IP information of the first mobile terminal 101, based on the received first IP allocation information.

In step 509, the first mobile terminal 101 receives second IP allocation information for the second mobile terminal 103. As described above, the second IP allocation information includes DHCP information for the second mobile terminal 103. For example, the DHCP information includes default gateway information, an IP address of the second mobile terminal 103, an IP netmask, first or second DNS server information, domain information, etc.

In step 511, the first mobile terminal 101 stores IP information of the second mobile terminal 103, based on the received second IP allocation information.

In step 513, the first mobile terminal 101 starts an IP information service. In step 515, the first mobile terminal 101 determines whether an IP information request message is received from the second mobile terminal 103.

Upon receiving the IP information request message, the first mobile terminal 101 generates IP information of mobile terminals included in the group, based on the stored IP information in step 517, and transmits the generated IP information to the second mobile terminal 103 in step 519.

FIG. 6 is a flow chart illustrating a method of providing IP information in a second mobile terminal according to an embodiment of the present invention.

Referring to FIG. 6, the second mobile terminal 103 connects via Wi-Fi Direct communication to the first mobile terminal 101 in step 601. More specifically, when forming a group through Wi-Fi Direct communication, the first and second mobile terminals 101 and 103 discover each other, and designate the first and second mobile terminals 101 and 103 as a group owner and a group client, respectively, through negotiation with each other.

In step 603, the second mobile terminal 103 is allocated a second IP address by communicating with the DHCP server 107.

In step 605, the second mobile terminal 103 generates an IP information request message, and sends the generated IP information request message to the first mobile terminal 101.

In step 607, the second mobile terminal 103 receives IP information from the first mobile terminal 101, in response to the IP information request message.

In step 609, the second mobile terminal 103 stores the IP information, such that the second mobile terminal 103 can perform communication-related functions, based on the stored IP information.

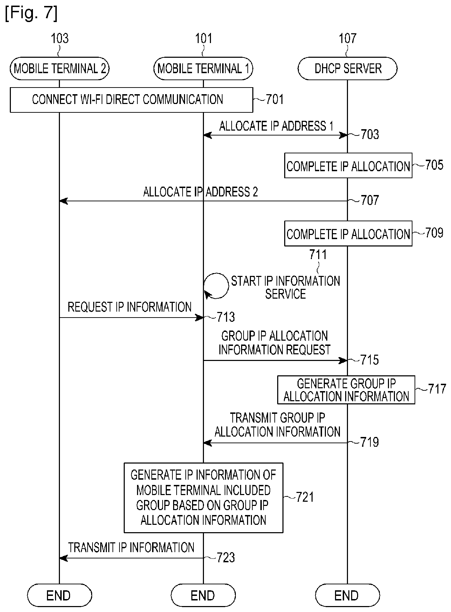

FIG. 7 is a signal flow diagram illustrating a method of providing IP information in a wireless communication system according to an embodiment of the present invention.

Referring to FIG. 7, the first and second mobile terminals 101 and 103 connect via Wi-Fi Direct communication in step 701. More specifically, when forming a group through Wi-Fi Direct communication, the first and second mobile terminals 101 and 103 discover each other, and designate the first and second mobile terminals 101 and 103 as a group owner and a group client, respectively, through negotiation with each other.

In step 703, the first mobile terminal 101 is allocated a first IP address by communicating with the DHCP server 107.

In step 705, upon receiving an ACK message indicating the success in allocation of the IP address from the first mobile terminal 101, the DHCP server 107 completes the IP allocation to the first mobile terminal 101.

In step 707, the second mobile terminal 103 is allocated a second IP address by communicating with the DHCP server 107.

In step 709, upon receiving an ACK message from the second mobile terminal 103, the DHCP server 107 completes the IP allocation to the second mobile terminal 103.

In step 711, the first mobile terminal 101 starts an IP information service.

In step 713, the second mobile terminal 103 generates an IP information request message, and sends the generated IP information request message to the first mobile terminal 101.

In step 715, upon receiving the IP information request message, the first mobile terminal 101 sends a group IP allocation information request message to the DHCP server 107. The group IP allocation information request message requests IP allocation information for at least one mobile terminal included in the group.

In step 717, the DHCP server 107 generates group IP allocation information for at least one mobile terminal included in the group. The group IP allocation information includes DHCP information for the first and second mobile terminals 101 and 103. For example, the DHCP information includes default gateway information, IP addresses of the first and second mobile terminals 101 and 103, an IP netmask, first or second DNS server information, domain information, etc.

In step 719, the DHCP server 107 transmits the generated group IP allocation information to the first mobile terminal 101. In step 721, the first mobile terminal 101 stores IP information of at least one mobile terminal included in the group, based on the received group IP allocation information, and generates IP information of at least one mobile terminal included in the group, based on the stored IP information.

In step 723, the first mobile terminal 101 transmits the generated IP information to the second mobile terminal 103.

Thereafter, the second mobile terminal 103 stores the received IP information and performs communication-related functions based on the stored IP information.

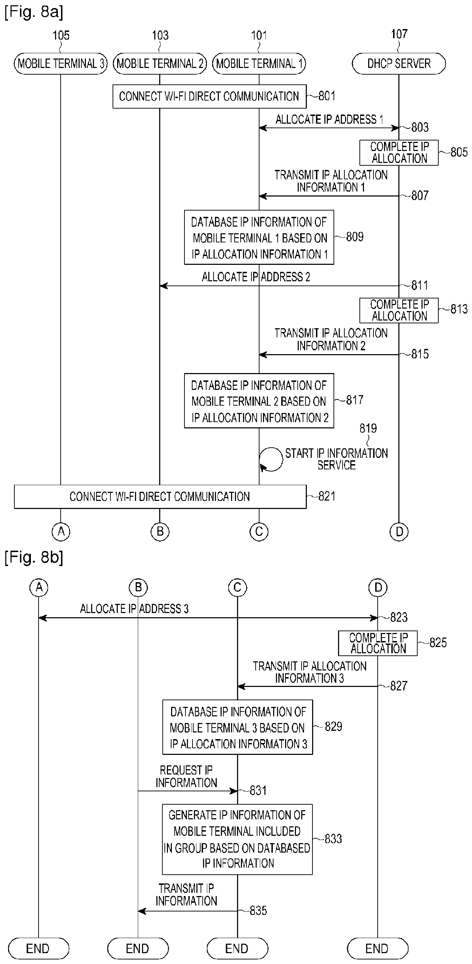

FIGs. 8a and 8b are signal flow diagrams illustrating a method of providing IP information in a wireless communication system according to an embodiment of the present invention. In FIG. 8a, steps 801 to 819 are the same as steps 401 to 419 illustrated in FIG. 4. Accordingly, a repetitive description of steps 801 to 819 will not be provided, and the description of FIGs. 8a and 8b will start from step 821.

Referring to FIGs. 8a and 8b, in step 821, a third mobile terminal 105 requests to enter the group, and the first to third mobile terminals 101, 103, and 105 connect via Wi-Fi Direct communication.

In step 823, the third mobile terminal 105 is allocated a third IP address by communicating with the DHCP server 107.

In step 825, upon receiving an ACK message indicating the success in allocation of the IP address, from the third mobile terminal 105, the DHCP server 107 completes the IP allocation to the third mobile terminal 105.

In step 827, the DHCP server 107 generates third IP allocation information for the third mobile terminal 105, and transmits the generated third IP allocation information to the first mobile terminal 101. The third IP allocation information includes DHCP information for the third mobile terminal 105. For example, the DHCP information includes default gateway information, an IP address of the third mobile terminal 105, an IP netmask, first or second DNS server information, domain information, etc.

In step 829, the first mobile terminal 101 stores IP information of the third mobile terminal 105, based on the received third IP allocation information. For example, the first mobile terminal 101 may store the IP information of the third mobile terminal 105 in a database as shown in Table 1.

In step 831, the second mobile terminal 103 generates an IP information request message, and sends the generated IP information request message to the first mobile terminal 101.

In step 833, the first mobile terminal 101 generates IP information of mobile terminals included in the group, based on the stored IP information, and in step 835, transmits the generated IP information to the second mobile terminal 103. For example, the second mobile terminal 103 may receive IP information including an IP address, an identifier, a virtual MAC address, a device name, and DHCP information for the first and third mobile terminals 101 and 105.

Thereafter, the second mobile terminal 103 stores the received IP information, and performs communication-related functions, based on the stored IP information.

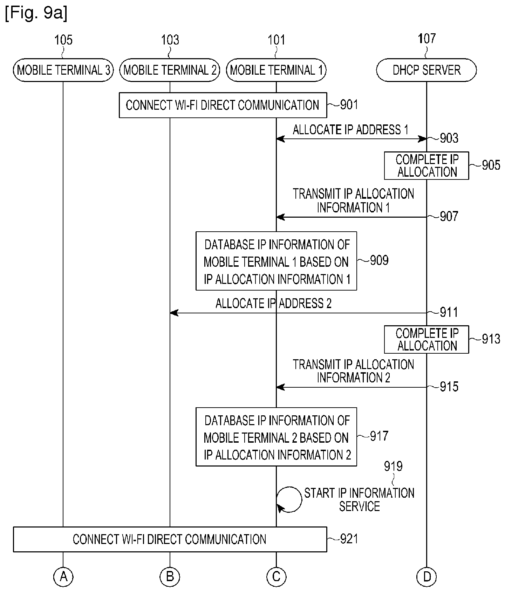

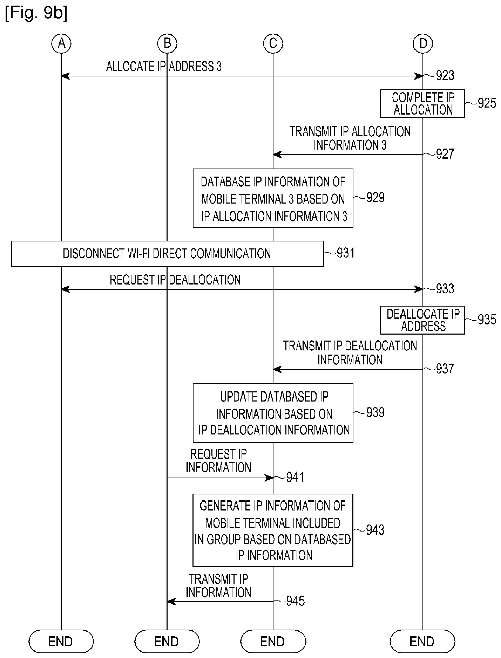

FIGs. 9a and 9b are signal flow diagrams illustrating a method of providing IP information in a wireless communication system according to an embodiment of the present invention. In FIG. 9a, steps 901 to 929 are the same as steps 801 to 829 illustrated in FIGs. 8a and 8b. Accordingly, a repetitive description of steps 801 to 819 will not be provided, and the description of FIGs. 9a and 9b will start from step 931.

Referring to FIGs. 9a and 9b, in step 931, the third mobile terminal 105 requests to leave the group, and the first and second mobile terminals 101 and 103 disconnect Wi-Fi Direct communication with the third mobile terminal 105. In step 933, the third mobile terminal 105 requests to deallocate the IP address of the third mobile terminal 105 with the DHCP server 107.

In step 935, the DHCP server 107 deallocates the IP address of the third mobile terminal 105, and in step 937, the DHCP server 107 generates IP deallocation information for the third mobile terminal 105, and transmits the generated IP deallocation information to the first mobile terminal 101. The IP deallocation information may include an indicator indicating the deallocation of an IP address of the third mobile terminal 105, and a deallocated IP address.

In step 939, the first mobile terminal 101 updates the databased IP information based on the received IP deallocation information. Herein, the first mobile terminal 101 deletes the IP information related to the third mobile terminal 105 from the stored IP information.

In step 941, the second mobile terminal 103 generates an IP information request message and sends the generated IP information request message to the first mobile terminal 101.

In step 943, the first mobile terminal 101 generates IP information of the mobile terminals included in the group, based on the updated, stored IP information, and in step 945, transmits the generated IP information to the second mobile terminal 103.

Thereafter, the second mobile terminal 103 stores the received IP information and performs communication-related functions based on the stored IP information.

As is apparent from the foregoing description, according to above-described embodiments of the present invention, a group owner provides IP information including IP addresses and MAC address information of the group owner and group clients (or group members) to the group clients, thus facilitating data communication among the group members.

While the present invention has been shown and described with reference to certain embodiments thereof, it will be understood by those skilled in the art that various changes in form and details may be made therein without departing from the scope of the present invention as defined by the appended claims.

## Claims

1. A first mobile terminal for transmitting Internet Protocol, IP, information in a Wireless Fidelity, Wi-Fi, Direct communication network, the first mobile terminal being an owner of a group of a plurality of mobile terminals in the Wi-Fi Direct communication network, wherein the first mobile terminal comprises:
a memory (209); and
a controller (201) configured to:
form (501) the group through the Wi-Fi Direct communication between the plurality of mobile terminals that includes the first mobile terminal
receive (505, 509) IP allocation information of at least one mobile terminal included in the group from a Dynamic Host Configuration Protocol, DHCP, server (107),
store (507, 511) the received IP allocation information of the at least one mobile terminal,
receive (515), from a second mobile terminal included in the group, an IP information request message requesting IP information of the at least one mobile terminal included in the group,
in response to receiving the IP information request message, generate (517) the IP information of the at least one mobile terminal included in the group based on the stored IP allocation information, and
transmit (519) the generated IP information to the second mobile terminal requesting the IP information.

2. The first mobile terminal of claim 1, wherein the controller is configured to store an IP address of the at least one mobile terminal with a corresponding virtual Media Access Control, MAC, address of the at least one mobile terminal, wherein the virtual MAC address is used by each mobile terminal included in the group to identify other mobile terminals except itself in the group.

3. The first mobile terminal of claim 1, wherein the generated IP information includes an IP address and a virtual MAC address of the at least one mobile terminal, wherein the virtual MAC address is used by each mobile terminal included in the group to identify other mobile terminals except itself in the group.

4. A second mobile terminal for receiving Internet Protocol, IP, information in a Wireless Fidelity, Wi-Fi, Direct communication network, the second mobile terminal comprising:
a memory (307); and
a controller (301) configured to:
form (601) a group through the Wi-Fi Direct communication between a plurality of mobile terminals that includes the second mobile terminal,
send (605) an IP information request message requesting IP information of at least one mobile terminal included in the group to a first mobile terminal being an owner of the group,
receive (607), from the first mobile terminal, the IP information of the at least one mobile terminal included in the group, in response to the IP information request message, and
store (609) the received IP information.

5. The second mobile terminal of claim 4, wherein the IP information includes an IP address and a virtual Media Access Control, MAC, address of the at least one mobile terminal, wherein the virtual MAC address is used by each mobile terminal included in the group to identify other mobile terminals except itself in the group.

6. A method for transmitting Internet Protocol, IP, information by a first mobile terminal included in a group of a plurality of mobile terminals, in a Wireless Fidelity, Wi-Fi, Direct communication network, the first mobile terminal being an owner of the group, the method comprising:
forming (501) the group through the Wi-Fi Direct communication between the plurality of mobile terminals that includes the first mobile terminal;
receiving (505, 509) IP allocation information of at least one mobile terminal included in the group from a Dynamic Host Configuration Protocol, DHCP, server (107);
storing (507, 511), by the first mobile terminal, the received IP allocation information of the at least one mobile terminal included in the group;
receiving (515), from a second mobile terminal included in the group, an IP information request message requesting IP information of the at least one mobile terminal included in the group;
in response to receiving the IP information request message, generating (517) the IP information of the at least one mobile terminal included in the group, based on the stored IP allocation information; and
transmitting (519) the generated IP information to the second mobile terminal requesting the IP information.

7. The method of claim 6, wherein the storing of the received IP allocation information comprises storing an IP address of the at least one mobile terminal with a corresponding virtual Media Access Control, MAC, address of the at least one mobile terminal, wherein the virtual MAC address is used by each mobile terminal included in the group to identify other mobile terminals except itself in the group.

8. The method of claim 6, wherein the generated IP information includes an IP address and a virtual MAC address of the at least one mobile terminal, wherein the virtual MAC address is used by each mobile terminal included in the group to identify other mobile terminals except itself in the group.

9. A method for receiving Internet Protocol, IP, information, the method being performed by a second mobile terminal included in a group of a plurality of mobile terminals, in a Wireless Fidelity, Wi-Fi, Direct communication network, the method comprising:
forming (601) the group through the Wi-Fi Direct communication between the plurality of mobile terminals that includes the second mobile terminal;
sending (605), by the mobile terminal, an IP information request message requesting IP information of at least one mobile terminal included in the group to a first mobile terminal being an owner of the group;
receiving (607), from the first mobile terminal, the IP information of the at least one mobile terminal included in the group, in response to the IP information request message; and
storing (609) the received IP information.

10. The method of claim 9, wherein the IP information includes an IP address and a virtual Media Access Control, MAC, address of the at least one mobile terminal, wherein the virtual MAC address is used by each mobile terminal included in the group to identify other mobile terminals except itself in the group.

## Patentansprüche

1. Erstes mobiles Endgerät zur Übertragung von Internetprotokoll (IP)-Informationen in einem Wireless Fidelity, Wi-Fi, direkten Kommunikationsnetz, wobei das erste mobile Endgerät Eigentümer einer Gruppe von mehreren mobilen Endgeräten in dem Wi-Fi direkten Kommunikationsnetz ist, wobei das erste mobile Endgerät Folgendes umfasst:
einen Speicher (209); und
eine Steuerung (201), die für Folgendes konfiguriert ist:
Bilden (501) der Gruppe durch die Wi-Fi direkte Kommunikation unter den mehreren mobilen Endgeräten, die das erste mobile Endgerät umfassen Empfangen (505, 509) von IP-Zuweisungsinformationen von mindestens einem mobilen Endgerät, das in der Gruppe von einem Dynamic Host Configuration Protocol (DHCP)-Server (107) inbegriffen ist,
Speichern (507, 511) der empfangenen IP-Zuweisungsinformationen des mindestens einen mobilen Endgeräts,
Empfangen (515) von einem zweiten mobilen Endgerät, das in der Gruppe inbegriffen ist, einer IP Informations-Anforderungsnachricht, die IP-Informationen bei dem mindestens einen mobilen Endgerät anfordert, das in der Gruppe inbegriffen ist,
als Antwort auf den Empfang der IP Informations-Anforderungsnachricht, Erzeugen (517) der IP-Informationen des mindestens einen mobilen Endgeräts, das in der Gruppe inbegriffen ist, basierend auf den gespeicherten IP-Zuweisungsinformationen, und
Übertragen (519) der erzeugten IP-Informationen an das zweite mobile Endgerät, das die IP-Informationen anfordert.

2. Erstes mobiles Endgerät nach Anspruch 1, wobei die Steuerung konfiguriert ist, um eine IP-Adresse des mindestens einen mobilen Endgeräts mit einer entsprechenden virtuellen Medienzugriffssteuerungs (MAC)-Adresse des mindestens einen mobilen Endgeräts zu speichern, wobei die virtuelle MAC-Adresse durch jedes mobile Endgerät benutzt wird, das in der Gruppe inbegriffen ist, um andere mobile Endgeräte außer sich selbst in der Gruppe zu identifizieren.

3. Erstes mobiles Endgerät nach Anspruch 1, wobei die erzeugten IP-Informationen eine IP-Adresse und eine virtuelle MAC-Adresse des mindestens einen mobilen Endgeräts umfassen, wobei die virtuelle MAC-Adresse durch jedes mobile Endgerät benutzt wird, das in der Gruppe inbegriffen ist, um andere mobile Endgeräte außer sich selbst in der Gruppe zu identifizieren.

4. Zweites mobiles Endgerät zum Empfang von Internetprotokoll (IP)-Informationen in einem Wireless Fidelity, Wi-Fi, direkten Kommunikationsnetz, wobei das zweite mobile Endgerät Folgendes umfasst:
einen Speicher (307); und
eine Steuerung (301), die für Folgendes konfiguriert ist:
Bilden (601) einer Gruppe durch die Wi-Fi direkte Kommunikation unter den mehreren mobilen Endgeräten, die das zweite mobile Endgerät umfassen,
Senden (605) einer IP-Informationsanforderungsnachricht, die IP-Informationen von mindestens einem in der Gruppe enthaltenen mobilen Endgerät anfordert, an ein erstes mobiles Endgerät, das Eigentümer der Gruppe ist,
Empfangen (607) der IP-Informationen des mindestens einen in der Gruppe enthaltenen mobilen Endgeräts von dem ersten mobilen Endgerät als Antwort auf die IP-Informationsanforderungsnachricht, und
Speichern (609) der empfangenen IP-Informationen.

5. Zweites mobiles Endgerät nach Anspruch 4, wobei die IP-Informationen eine IP-Adresse und eine virtuelle Medienzugriffssteuerungs (MAC)-Adresse des mindestens einen mobilen Endgeräts umfassen, wobei die virtuelle MAC-Adresse durch jedes mobile Endgerät benutzt wird, das in der Gruppe inbegriffen ist, um andere mobile Endgeräte außer sich selbst in der Gruppe zu identifizieren.

6. Verfahren zum Übertragen von Internetprotokoll (IP)-Informationen durch ein erstes mobiles Endgerät, das in einer Gruppe von mehreren mobilen Endgeräten inbegriffen ist, in einem Wireless Fidelity, Wi-Fi, direkten Kommunikationsnetz, wobei das erste mobile Endgerät ein Eigentümer der Gruppe ist, wobei das Verfahren Folgendes umfasst:
Bilden (501) der Gruppe durch die Wi-Fi direkte Kommunikation unter den mehreren mobilen Endgeräten, die das erste mobile Endgerät umfassen;
Empfangen (505, 509) von IP-Zuweisungs-Informationen von mindestens einem mobilen Endgerät, das in der Gruppe von einem Dynamic Host Configuration Protocol (DHCP)-Server (107) inbegriffen ist;
Speichern (507, 511) der empfangenen IP-Zuweisungsinformationen des mindestens einen mobilen Endgeräts, das in der Gruppe eingeschlossen ist, durch das erste mobile Endgerät;
Empfangen (515) von einem zweiten mobilen Endgerät, das in der Gruppe inbegriffen ist, einer IP Informations-Anforderungsnachricht, die IP Informationen bei dem mindestens einen mobilen Endgerät anfordert, das in der Gruppe inbegriffen ist;
als Antwort auf den Empfang der IP Informations-Anforderungsnachricht, Erzeugen (517) der IP-Informationen des mindestens einen mobilen Endgeräts, das in der Gruppe inbegriffen ist, basierend auf den gespeicherten IP-Zuweisungsinformationen, und
Übertragen (519) der erzeugten IP-Informationen an das zweite mobile Endgerät, das die IP-Informationen anfordert.

7. Verfahren nach Anspruch 6, wobei das Speichern der empfangenen IP-Zuweisungsinformationen das Speichern einer IP-Adresse des mindestens einen mobilen Endgeräts mit einer entsprechenden virtuellen Medienzugriffssteuerungs (MAC)-Adresse des mindestens einen mobilen Endgeräts umfasst, wobei die virtuelle MAC-Adresse von jedem in der Gruppe inbegriffenen mobilen Endgerät verwendet wird, um andere mobile Endgeräte außer sich selbst in der Gruppe zu identifizieren.

8. Verfahren nach Anspruch 6, wobei die erzeugten IP-Informationen eine IP-Adresse und eine virtuelle MAC-Adresse des mindestens einen mobilen Endgeräts umfassen, wobei die virtuelle MAC-Adresse von jedem mobilen Endgerät, das in der Gruppe inbegriffen ist, verwendet wird, um andere mobile Endgeräte außer sich selbst in der Gruppe zu identifizieren.

9. Verfahren zum Empfangen von Internetprotokoll (IP)- Informationen, wobei das Verfahren von einem zweiten mobilen Endgerät ausgeführt wird, das in einer Gruppe von mehreren mobilen Endgeräten in einem Wireless Fidelity, Wi-Fi, direkten Kommunikationsnetz eingeschlossen ist, wobei das Verfahren Folgendes umfasst:
Bilden (601) der Gruppe durch die Wi-Fi direkte Kommunikation unter den mehreren mobilen Endgeräten, die das zweite mobile Endgerät umfassen;
Senden (605) einer IP-Informationsanforderungsnachricht, die IP-Informationen von mindestens einem in der Gruppe enthaltenen mobilen Endgerät anfordert, an ein erstes mobiles Endgerät, das Eigentümer der Gruppe ist, durch das mobile Endgerät;
Empfangen (607) der IP-Informationen des mindestens einen in der Gruppe enthaltenen mobilen Endgeräts von dem ersten mobilen Endgerät als Antwort auf die IP-Informationsanforderungsnachricht, und
Speichern (609) der empfangenen IP-Informationen.

10. Verfahren nach Anspruch 6, wobei die erzeugten IP-Informationen eine IP-Adresse und eine virtuelle Medienzugriffssteuerungs (MAC)-Adresse des mindestens einen mobilen Endgeräts umfassen, wobei die virtuelle MAC-Adresse von jedem mobilen Endgerät, das in der Gruppe inbegriffen ist, verwendet wird, um andere mobile Endgeräte außer sich selbst in der Gruppe zu identifizieren.

## Revendications

1. Premier terminal mobile pour transmettre des informations de protocole Internet, IP, dans un réseau de communication Wireless Fidelity, Wi-Fi, Direct, le premier terminal mobile étant propriétaire d'un groupe d'une pluralité de terminaux mobiles dans le réseau de communication Wi-Fi Direct, où le premier terminal mobile comprend :
une mémoire (209) ; et
un contrôleur (201) configuré pour :
former (501) le groupe à travers de la communication Wi-Fi Direct entre la pluralité de terminaux mobiles comprenant le premier terminal mobile, recevoir (505, 509) des informations d'attribution d'IP d'au moins un terminal mobile inclus dans le groupe à partir d'un serveur de protocole de configuration dynamique des hôtes, DHCP, (107),
stocker (507, 511) les informations d'attribution d'IP reçues de l'au moins un terminal mobile,
recevoir (515), à partir d'un deuxième terminal mobile inclus dans le groupe, un message de demande d'informations d'IP demandant des informations d'IP de l'au moins un terminal mobile inclus dans le groupe,
en réponse à la réception du message de demande d'informations d'IP, générer (517) les informations d'IP de l'au moins un terminal mobile inclus dans le groupe sur la base des informations d'attribution d'IP stockées, et transmettre (519) les informations d'IP générées au deuxième terminal mobile demandant les informations d'IP.

2. Premier terminal mobile selon la revendication 1, où le contrôleur est configuré pour stocker une adresse IP de l'au moins un terminal mobile avec une adresse virtuelle correspondante de contrôle d'accès au support, MAC, de l'au moins un terminal mobile, où l'adresse MAC virtuelle est utilisée par chaque terminal mobile inclus dans le groupe pour identifier d'autres terminaux mobiles sauf lui-même dans le groupe.

3. Premier terminal mobile selon la revendication 1, où les informations d'IP générées comprennent une adresse IP et une adresse MAC virtuelle de l'au moins un terminal mobile, où l'adresse MAC virtuelle est utilisée par chaque terminal mobile inclus dans le groupe pour identifier d'autres terminaux mobiles sauf lui-même dans le groupe.

4. Deuxième terminal mobile pour recevoir des informations de protocole Internet, IP, dans un réseau de communication Wireless Fidelity, Wi-Fi, Direct, le deuxième terminal mobile comprenant :
une mémoire (307) ; et
un contrôleur (301) configuré pour :
former (601) un groupe à travers de la communication Wi-Fi Direct entre une pluralité de terminaux mobiles qui comprend le deuxième terminal mobile,
envoyer (605) un message de demande d'informations d'IP demandant des informations d'IP d'au moins un terminal mobile inclus dans le groupe à un premier terminal mobile étant propriétaire du groupe,
recevoir (607), en provenance du premier terminal mobile, les informations d'IP de l'au moins un terminal mobile inclus dans le groupe, en réponse au message de demande d'informations d'IP, et
stocker (609) les informations d'IP reçues.

5. Deuxième terminal mobile selon la revendication 4, où les informations d'IP comprennent une adresse IP et une adresse virtuelle de contrôle d'accès au support, MAC, de l'au moins un terminal mobile, où l'adresse MAC virtuelle est utilisée par chaque terminal mobile inclus dans le groupe pour identifier d'autres terminaux mobiles sauf lui-même dans le groupe.

6. Procédé pour transmettre des informations de protocole Internet, IP, par un premier terminal mobile inclus dans un groupe d'une pluralité de terminaux mobiles, dans un réseau de communication Wireless Fidelity, Wi-Fi, Direct, le premier terminal mobile étant propriétaire du groupe, le procédé comprenant :
former (501) le groupe à travers de la communication Wi-Fi Direct entre la pluralité de terminaux mobiles qui comprend le premier terminal mobile ;
recevoir (505, 509) des informations d'attribution d'IP d'au moins un terminal mobile inclus dans le groupe à partir d'un serveur (107) de protocole de configuration dynamique des hôtes, DHCP ;
stocker (507, 511), par le premier terminal mobile, les informations d'attribution d'IP reçues de l'au moins un terminal mobile inclus dans le groupe ;
recevoir (515), à partir d'un deuxième terminal mobile inclus dans le groupe, un message de demande d'informations d'IP demandant des informations d'IP de l'au moins un terminal mobile inclus dans le groupe ;
en réponse à la réception du message de demande d'informations d'IP, générer (517) les informations d'IP de l'au moins un terminal mobile inclus dans le groupe, sur la basé des informations d'attribution d'IP stockées ; et
transmettre (519) les informations d'IP générées au deuxième terminal mobile demandant les informations d'IP.

7. Procédé selon la revendication 6, où le stockage des informations d'attribution d'IP reçues comprend stocker une adresse IP de l'au moins un terminal mobile avec une adresse virtuelle correspondante de contrôle d'accès au support, MAC, de l'au moins un terminal mobile, où l'adresse MAC virtuelle est utilisée par chaque terminal mobile inclus dans le groupe pour identifier d'autres terminaux mobiles sauf lui-même dans le groupe.

8. Procédé selon la revendication 6, où les informations d'IP générées comprennent une adresse IP et une adresse MAC virtuelle de l'au moins un terminal mobile, où l'adresse MAC virtuelle est utilisée par chaque terminal mobile inclus dans le groupe pour identifier d'autres terminaux mobiles sauf lui-même dans le groupe.

9. Procédé pour recevoir des informations de protocole Internet, IP, le procédé étant mis en œuvre par un deuxième terminal mobile inclus dans un groupe d'une pluralité de terminaux mobiles, dans un réseau de communication Wireless Fidelity, Wi-Fi, Direct, le procédé comprenant :
former (601) le groupe à travers de la communication Wi-Fi Direct entre la pluralité de terminaux mobiles qui comprend le deuxième terminal mobile ;
envoyer (605), par le terminal mobile, un message de demande d'informations d'IP demandant des informations d'IP d'au moins un terminal mobile inclus dans le groupe à un premier terminal mobile étant propriétaire du groupe ;
recevoir (607), à partir du premier terminal mobile, les informations d'IP de l'au moins un terminal mobile inclus dans le groupe, en réponse au message de demande d'informations d'IP ; et
stocker (609) les informations d'IP reçues.

10. Procédé selon la revendication 9, où les informations d'IP comprennent une adresse IP et une adresse virtuelle de contrôle d'accès au support, MAC, de l'au moins un terminal mobile, où l'adresse MAC virtuelle est utilisée par chaque terminal mobile inclus dans le groupe pour identifier d'autres terminaux mobiles sauf lui-même dans le groupe.
